# EUROPEAN PATENT APPLICATION

(11) **EP 4 324 940 A1**
(43) Date of publication of application: **21.02.2024**
(21) Application number: 22811071.4
(22) Date of filing: 19.04.2022
(51) Int. Cl.: C21C 7/064, C21C 7/06

(54) **METHOD FOR DEPHOSPHORIZATION OF MOLTEN METAL**

(30) Priority: 26.05.2021 JP 2021088400
(71) Applicant: JFE Steel Corporation, Tokyo 100-0011 (JP)
(72) Inventor: OGASAWARA, Futoshi, Tokyo 100-0011 (JP); KAWABATA, Ryo, Tokyo 100-0011 (JP)
(74) Representative: Hoffmann Eitle
(86) International application number: PCT/JP2022/018163
(87) International publication number: WO 2022/249797

(57) **Abstract**

A method for dephosphorization of molten iron that can stably produce low-phosphorus steel is proposed. This method for dephosphorization of molten iron includes, while blowing a hydrogen gas, a hydrocarbon gas, or a mixture of these gases into molten iron held in a vessel, supplying a slag-forming agent and an oxygen source to perform a dephosphorization treatment of the molten iron and obtain dephosphorized molten iron, and after the dephosphorization treatment, separating slag floating on a surface of the dephosphorized molten iron from the dephosphorized molten iron. It is preferable that, after the slag is separated, the dephosphorized molten iron be deoxidized with a deoxidizing agent. In this method for dephosphorization of molten iron, before the dephosphorization treatment, when obtaining molten iron by melting a cold iron source in a melting furnace and discharging the molten iron from the melting furnace into the vessel, one or both of the following are performed: separating generated slag from the molten iron before the discharge; and separating slag that has flowed into the vessel along with the molten iron from the molten iron.

## Description

### Technical Field

The present invention relates to a method for dephosphorization of molten iron for producing iron and steel products with low-phosphorus concentrations, and particularly to a method for dephosphorization of molten iron obtained by melting a cold iron source.

### Background Art

In recent years, from the viewpoint of preventing global warming, the steel industry has also been advancing the development of technology for cutting down on fossil fuel consumption and thereby reducing CO₂ gas generation. Conventional integrated ironworks produce molten pig iron by reducing iron ore with carbon. To produce molten pig iron, about 500 kg of carbon source per ton of molten pig iron is required for reduction of iron ore or the like. On the other hand, producing molten steel using a cold iron source, such as iron scrap as the raw material does not require a carbon source needed to reduce iron ore, and requires only energy corresponding to an amount of heat enough to melt the cold iron source. Thus, CO₂ emissions can be drastically reduced.

When scrap (iron scrap) is used as the cold iron source, the phosphorus concentration in the molten iron after melting is low compared with that of blast-furnace molten pig iron. On the other hand, when reduced iron is used as the cold iron source, the phosphorus concentration in the molten iron after melting is almost equivalent to that of blast-furnace molten pig iron. Thus, it is necessary to perform dephosphorization refining so as to meet the range of product specifications. As the amount of scrap available in the market is limited, the usage ratio of reduced iron is expected to increase in the future. In that case, the load of dephosphorization in the stage of refining molten iron is likely to increase.

When producing low-phosphorus steel from blast-furnace molten pig iron, it is common practice to perform a so-called molten pig iron dephosphorization treatment in which a dephosphorization treatment is performed at the stage of molten pig iron, as a lower temperature is thermodynamically more advantageous for the dephosphorization reaction. On the other hand, when producing low-phosphorus steel by mixing in a cold iron source at a high ratio, the mainstream method is to melt the cold iron source in an electric furnace, such as an arc furnace, and produce low-carbon molten iron without going through the stage of molten pig iron. A common process of refining molten iron in an electric furnace is, for example, the method as described in Patent Literature 1. The technology described in Patent Literature 1 is a method in which, after raw materials including a cold iron source are charged, electric energy is supplied to melt the cold iron source and obtain low-carbon molten iron, and an oxygen source and a dephosphorization flux are supplied to this molten iron to thereby reduce the phosphorus concentration as well as the carbon concentration in the molten iron.

As mentioned above, the need for a technology of dephosphorizing molten iron obtained by mixing in reduced iron at a high ratio is expected to increase down the road, and then the following challenges are likely to emerge. Currently available reduced irons are predominantly those that have been reduced with hydrocarbon and therefore contain about 1 mass% carbon. In the future, however, given the need to further reduce CO₂ emissions, reduced iron produced using a reducing agent that contains less carbon, such as hydrogen, is likely to become mainstream. Such reduced iron may contain little of a carbon component. In that case, the carbon concentration in the molten iron resulting from melting the reduced iron is lowered while the phosphorus concentration therein is raised. Since the melting point of molten iron becomes higher as the carbon concentration becomes lower, a dephosphorization treatment of low-carbon, high-phosphorus molten iron is forced to be performed under a higher temperature condition, which is disadvantageous for the dephosphorization reaction. This requires a corresponding method for dephosphorization of molten iron. In addition, reduced iron includes gangue components, such as silicon oxide and aluminum oxide, contained in its raw material, iron ore, and thus generates a large amount of slag when melted. The method for dephosphorization of molten iron should take this into account as well.

As methods of performing a dephosphorization treatment of molten iron at the stage of molten steel, for example, the methods described in Patent Literature 2 and Patent Literature 3 are also disclosed. The method described in Patent Literature 2 involves blowing a gas, formed mainly by an oxygen gas, as a jet flow through a top-blowing lance onto a surface of molten iron inside a reaction vessel having a temperature of 1550°C or higher and a carbon content of 0.5 mass% or lower, and at the same time throwing a lime source composed mainly of limestone or slaked lime onto a part of the surface of the molten iron on which the jet flow is impinging to thereby decarburize and dephosphorize the molten iron. The method described in Patent Literature 3 involves discharging molten steel from a converter into a ladle in a state where the oxygen concentration in the molten steel is 200 mass ppm or higher, and adding a dephosphorizing agent at the time of the discharge to obtain slag having a ratio of CaO/SiO₂ on a mass basis of 2.5 or higher and a total Fe content of 15 mass% or higher, and introducing a gas into the molten steel during the discharge and after the discharge to stir the molten steel.

### Citation List

### Patent Literature

Patent Literature 1: JP-H08-225880A
Patent Literature 2: JP-2005-89839A
Patent Literature 3: JP-S61-291913A

### Summary of Invention

### Technical Problem

However, the above-described conventional technologies have the following problems yet to be solved.

As mentioned above, if the usage ratio of reduced iron produced using a reducing agent that contains less carbon increases down the road, the carbon concentration in molten iron after melting will become low. As a result, when an oxygen source is supplied to perform a dephosphorization treatment in the method of Patent Literature 1, the concentration of dissolved oxygen in the molten steel rises significantly, causing an increase in the amount of deoxidizing metal aluminum to be used. This leads to a problem in that the production cost increases, as well as a quality problem due to an increase in the generation amount of alumina-based inclusions that are a deoxidation product. Moreover, as the amount of reduced iron to be used increases, the phosphorus concentration after melting increases, which makes it necessary to enhance the dephosphorization capacity. To do so, the slag basicity defined by (calcium oxide concentration)/(silicon oxide concentration) as a mass ratio needs to be raised. However, when the amount of reduced iron to be used increases, the generation amounts of silicon oxide and aluminum oxide increase at the same time, so that securing the dephosphorization capacity requires an enormous amount of lime to be added.

The method of Patent Literature 2 aims to improve the dephosphorization efficiency at a late stage of decarburization refining of molten iron and for molten iron obtained by melting iron scrap, and has mitigated excessive oxygen blowing that is one of problems with Patent Literature 1. However, this method does not take into account the influence of gangue components originating from reduced iron, and cannot always be applied to an iron source environment (a slag amount) for which the present invention is intended. Moreover, the molten iron for which Patent Literature 2 is intended has a phosphorus concentration before the dephosphorization treatment as low as 0.04 mass% or less, and it seems that treating molten iron having a phosphorus concentration equivalent to that of blast-furnace molten pig iron (0.10 mass% or higher) is not expected.

According to a study by the inventors, the method of Patent Literature 3 suffers a lack of dephosphorization capacity. While Patent Literature 3 does not mention the phosphorus concentration before the dephosphorization treatment, it seems that treating molten iron having a phosphorus concentration equivalent to that of blast-furnace molten pig iron (0.10 mass% or higher) is not expected.

The present invention has been devised in view of these circumstances, and an object thereof is to propose a method for dephosphorization of molten iron that can stably produce low-phosphorus steel even when the phosphorus concentration or the slag amount has increased, without having excessive oxygen dissolved in the molten iron in a dephosphorization treatment of the molten iron. Another object is to propose a method for dephosphorization of molten iron that is suitable also for a case where reduced iron produced using a reducing agent that contains less carbon is mixed in.

### Solution to Problem

In view of the above-described problems, the inventors have vigorously conducted studies on a metallurgical reaction effect of the use of a gas containing hydrogen atoms in a molten iron dephosphorization treatment. As a result, the inventors have completed the present invention.

A first method for dephosphorization of molten iron according to the present invention that advantageously solves the above-described problems is characterized by including, while blowing a hydrogen gas, a hydrocarbon gas, or a mixture of these gases into molten iron held in a vessel, supplying a slag-forming agent and an oxygen source to perform a dephosphorization treatment of the molten iron and obtain dephosphorized molten iron, and after the dephosphorization treatment, separating slag floating on a surface of the dephosphorized molten iron from the dephosphorized molten iron.

The first method for dephosphorization of molten iron according to the present invention could have more preferable solutions as follows:
(a) that, after the slag is separated, the dephosphorized molten iron is deoxidized with a deoxidizing agent;
(b) that a carbon content in the molten iron before the dephosphorization treatment is 0.5 mass% or lower;
(c) that the molten iron is obtained by melting a cold iron source;
(d) that the cold iron source includes reduced iron; and
(e) that the vessel is a ladle.

A second method for dephosphorization of molten iron according to the present invention as follows could be a more preferable solution: before the dephosphorization treatment of molten iron performed in one of the above-described first method for dephosphorization of molten iron, when obtaining molten iron by melting a cold iron source in a melting furnace and discharging the molten iron from the melting furnace into the vessel, one or both of the following are performed: separating generated slag from the molten iron before the discharge; and separating slag that has flowed into the vessel along with the molten iron from the molten iron.

### Advantageous Effects of Invention

According to the present invention, when a dephosphorization treatment is performed by supplying a slag-forming agent and an oxygen source while supplying a hydrogen gas, a hydrocarbon gas, or a mixture of these gases to molten iron, the hydrogen gas or the hydrocarbon gas causes a deoxidation reaction of dissolved oxygen in the molten iron, which can help prevent excessive oxygen from dissolving in the molten iron. Moreover, the supplied gas containing hydrogen atoms and a steam gas resulting from the deoxidation reaction promote stirring of the molten iron, so that low-phosphorus steel can be stably produced. Thus, even when a large amount of reduced iron with a low carbon concentration is used and the phosphorus concentration in the molten iron or the slag amount increases, low-phosphorus steel can be stably produced by performing slag removal or the like after melting.

### Description of Embodiments

For the present invention, the inventors have made the following speculations.

To promote a dephosphorization reaction that is an oxidization reaction, it is necessary to maintain a high level of dissolved oxygen near the slag-metal interface that is a reaction region. To do so, raising the concentration of dissolved oxygen in the molten iron to about 500 mass ppm suffices. When a slag-forming agent and an oxygen source are supplied to the molten iron, iron oxide is generated at a part of the top surface of the molten iron where the oxygen source has been supplied, and this iron oxide forms molten slag along with the slag-forming agent. Part of the iron oxide in the slag decomposes and the resulting oxygen dissolves in the molten iron. Meanwhile, part of the supplied oxygen source causes oxygen to dissolve in the molten iron, so that the concentration of the dissolved oxygen rises. As a result, the dissolved oxygen near the slag-metal interface is maintained at a high level and the dephosphorization reaction progresses. If carbon is present in the molten iron, the dissolved oxygen supplied from the oxygen source and the molten slag reacts with the carbon in the molten iron, so that an excessive increase in dissolved oxygen does not occur. However, when the carbon concentration in the molten iron is low, the dissolved oxygen keeps increasing.

When molten iron having a carbon concentration of 0.5 mass% or lower is to be dephosphorized, the concentration of dissolved oxygen in the molten iron before the dephosphorization treatment is roughly 100 mass ppm or higher. When the dephosphorization treatment is performed from this state, the concentration of the dissolved oxygen in the molten iron rises further and reaches a state like exceeding 1000 mass ppm. This leads to problems such as that the amount used of deoxidizing aluminum that is added after slag removal following the dephosphorization treatment increases, and that the Fe yield degrades due to an increase in oxidation loss of Fe.

To prevent an excessive increase in dissolved oxygen, a deoxidizing element, such as aluminum or silicon, is added during the dephosphorization treatment. This is not preferable, as in that case silicon oxide and aluminum oxide that are deoxidation products add to the slag volume. Further, this is not preferable, as the amount of lime required to secure the slag basicity increases.

As a solution, the inventors have speculated that supplying a hydrogen gas or a hydrocarbon gas or a mixture of these gases during the dephosphorization treatment can prevent an excessive increase in dissolved oxygen as the dissolved oxygen in molten iron becomes deoxidized by the gaseous deoxidizing agent. In addition, the inventors have speculated that an excessive increase in the slag volume or the required amount of lime can be prevented because the slag composition remains the same.

Performing the dephosphorization treatment during a melting step, i.e., inside a melting furnace is not preferable, because melting reduced iron generates a large amount of gangue components, such as silicon oxide and aluminum oxide. The inventors have speculated that discharging the slag before discharging the molten iron from the melting furnace, or removing the slag after discharging the molten iron, or discharging the slag before discharging the molten iron from the melting furnace and further removing the slag after the discharge, and then performing the dephosphorization treatment in a ladle or the like can prevent an increase in the slag volume due to the influence of gangue contained in the reduced iron.

Embodiments of the present invention will be specifically described below.

As a first step, in a steelmaking melting furnace, an iron source is melted and heated using electric energy. Here, as the steelmaking melting furnace, an electric furnace, such as an arc furnace or an induction furnace, can be used. In this case, as the iron source, not only a solid iron source (cold iron source), such as scrap or reduced iron, but also melted iron that has been melted by another process may be used. As the heat energy supplied to melt the solid iron source and heat the iron source, not only electric energy but also combustion heat of metal or the like may be supplementarily used. It is preferable that these energies be renewable energies from the viewpoint of cutting down on CO₂ emissions.

As a second step, the molten iron is discharged into a vessel, such as a ladle, and the slag is removed. The slag removal may be performed using a slag dragger or the like. When the height of the freeboard in the ladle (the height from the upper end of the ladle to the surface of the molten iron) is insufficient, before the molten iron is discharged from the electric furnace, the furnace body may be tilted to flow out the slag. Alternatively, before the molten iron is discharged from the electric furnace, the furnace body may be tilted to flow out the slag, and then the slag discharged into a vessel, such as a ladle, along with the molten iron may be further removed.

As a third step, a slag-forming agent composed mainly of lime is added onto the molten iron inside the ladle through an automatic feeding hopper or the like. Here, the feed amount of the slag-forming agent should be adjusted such that the slag basicity defined by a ratio (calcium oxide concentration)/(silicon oxide concentration) on a mass basis becomes about 2.0. Thereafter, an oxygen gas is supplied as an oxygen source through a top-blowing lance. The flow rate of the oxygen gas per unit mass of the molten iron is preferably about 0.05 to 0.15 Nm³/(t·min). Here, "Nm³" means a volume of a gas in a standard state. In this Description, the standard state of a gas is 0°C and 1 atm (101325 Pa). It is preferable that the oxygen blowing speed and the lance height be finely adjusted, as the behavior of the occurrence of spitting varies depending on the height of the freeboard in the ladle and the nozzle shape of the top-blowing lance. When the oxygen gas is supplied, the temperature of the molten iron rises due to the heat of the oxidation reaction. Thus, there is no problem with feeding a solid oxygen source, such as iron oxide, to adjust the temperature of the molten iron. As the oxygen source, an oxygen-containing gas that is an oxygen gas diluted with an inert gas may be used.

At the same time as supply of the oxygen source is started, a gas containing hydrogen atoms formed by a hydrogen gas, a hydrocarbon gas, or a mixture of these gases is supplied into the molten iron. There is no problem with supplying this gas containing hydrogen atoms through an injection lance, or supplying it by installing a porous plug or the like at the bottom of the ladle. The gas containing hydrogen atoms causes a deoxidation reaction of the dissolved oxygen in the molten iron, which can help prevent excessive oxygen from dissolving in the molten iron. Further, the supplied gas containing hydrogen atoms and a steam gas resulting from the deoxidation reaction form air bubbles. The buoyancy of these air bubbles has a promoting effect on stirring of the molten iron. As a result of vigorously conducting studies, the inventors found that, as a total amount of hydrogen gas and hydrocarbon gas to be supplied, a flow rate of about 3 to 10 vol% of the flow rate of the oxygen supplied through the top-blowing lance was an appropriate range. When the supply amount is smaller than that, the reducing effect on the dissolved oxygen may become small due to the reduced deoxidation effect. Conversely, when the supply amount is excessively large, the dissolved oxygen in the molten iron decreases so much that the dephosphorization capacity may decrease.

As a fourth step, an operation of separating the slag floating on the surface of the dephosphorized molten iron from the dephosphorized molten iron is performed. For example, slag removal is performed in which the vessel, such as a ladle, housing the dephosphorized molten iron is tilted and the slag floating on the surface of the dephosphorized molten iron is scraped out using a slag dragger or the like. The state immediately after the dephosphorization treatment is a state where removed phosphorus of the phosphorus that was contained in the molten iron before the dephosphorization treatment has moved into the slag. Therefore, even when deoxidation of dephosphorized molten iron is performed in a later deoxidation step by performing an operation of separating the dephosphorized slag from the dephosphorized molten iron, so-called rephosphorization in which phosphorus moves from the slag into the molten iron again can be prevented. From the viewpoint of preventing this rephosphorization, it is preferable that the dephosphorized slag be removed as much as possible so as not to remain on the surface of the molten iron. However, if the slag is removed until the surface of the molten iron is completely exposed, a decrease in the iron yield or a drop in the molten iron temperature may become significant. Therefore, the extent of slag removal may be adjusted according to the required level of the phosphorus concentration in the product.

As a fifth step, after the slag is separated from the dephosphorized molten iron, an operation of deoxidizing the dephosphorized molten iron with a deoxidizing agent is performed. This deoxidation is performed within a period after the slag is separated from the dephosphorized molten iron until the molten iron is cast. For example, deoxidation may be performed soon after slag removed by adding a deoxidizing agent to the ladle housing the molten iron, or deoxidation may be performed after slag removal by transferring the ladle housing the molten iron to a refining facility for the next step and adding a deoxidizing agent during the refining treatment that is the next step. Specifically, when the next step is, for example, a step of performing a vacuum degassing treatment in an RH vacuum degassing facility, deoxidation may be performed by adding a deoxidizing agent during the vacuum degassing treatment. Here, the timing of adding the deoxidizing agent during the vacuum degassing treatment is not particularly limited. A so-called killing treatment may be performed in which deoxidation is performed at an initial stage of the vacuum degassing treatment by adding a deoxidizing agent and then the deoxidized molten iron is circulated. Alternatively, a so-called rimming treatment may be performed in which molten iron is circulated in the first half of the vacuum degassing treatment without a deoxidizing agent added thereto, and is decarburized during that period by blowing oxygen as necessary, and thereafter the killing treatment may be performed in the latter half of the treatment by adding a deoxidizing agent. The next step is not limited to a treatment in an RH vacuum degassing facility, but may also be a treatment in a VOD facility or may be a treatment in a ladle furnace (LF). The timing of adding a deoxidizing agent during the treatments in these facilities is not limited, as with the case of the above-described vacuum degassing treatment in an RH vacuum degassing facility. Further, as the deoxidizing agent to be added, an ordinary deoxidizing agent such as metallic aluminum, metallic silicon, ferrosilicon, or silicon manganese can be used.

### Examples

In a 150 t-scale electric furnace, scrap or reduced iron was charged and melted, and after the molten iron was discharged into a ladle, the slag was removed. The reduced iron used in the test was reduced iron produced through reduction with hydrogen, and the carbon concentration was analyzed to be 0.15 mass%. A slag-forming agent was added to the discharged molten iron inside the ladle, and an oxygen gas was supplied through a top-blowing lance while an argon gas, a hydrogen gas, a hydrocarbon gas, or a mixture of a hydrogen gas and a hydrocarbon gas was supplied from the bottom of the ladle to perform a dephosphorization treatment. After completion of the dephosphorization treatment, the slag on the bath surface in the ladle was removed, and then a vacuum degassing treatment was performed by an RH circulation device. An Al-containing substance for deoxidation was fed, and adjustment of other components was performed.

### (Test 1)

150 t of scrap as a cold iron source was melted in an electric furnace, and after the molten iron was discharged into a ladle, the slag was removed. The molten iron after being discharged into the ladle had a C concentration [C]; of 0.25 mass% and a P concentration [P]; of 0.040 mass%, and a concentration of dissolved oxygen [O]ᵢ in the molten iron was 125 mass ppm. After 2 t of quicklime and 1 t of silica stone were added, an oxygen gas was supplied through a top-blowing lance at 20 Nm³/min while an argon gas was supplied at 1 Nm³/min from a porous plug installed at the bottom of the ladle to perform a dephosphorization treatment for ten minutes. As a result, the phosphorus concentration in the molten iron after the dephosphorization treatment was reduced to 0.004 mass%, while a dissolved oxygen concentration [O]_{f} was 1530 mass ppm. Accordingly, the feed amount of deoxidizing Al and the number of quality defects were large. In addition, the Fe yield was low.

### (Test 2)

150 t of scrap as a cold iron source was melted in an electric furnace, and after the molten iron was discharged into a ladle, the slag was removed. The molten iron after being discharged into the ladle had a C concentration [C]; of 0.23 mass% and a P concentration [P]; of 0.035 mass%, and the concentration of dissolved oxygen [O]ᵢ in the molten iron was 140 mass ppm. After 2 t of quicklime and 1 t of silica stone were added, an oxygen gas was supplied through a top-blowing lance at 20 Nm³/min while a hydrogen gas was supplied at 1 Nm³/min from a porous plug installed at the bottom of the ladle to perform a dephosphorization treatment for ten minutes. As a result, the phosphorus concentration in the molten iron after the dephosphorization treatment was reduced to 0.005 mass%. In this case, the dissolved oxygen concentration [O]_{f} was 630 mass ppm, so that the feed amount of deoxidizing Al and the number of quality defects were small. In addition, the Fe yield was high.

### (Test 3)

150 t of scrap as a cold iron source was melted in an electric furnace, and after the molten iron was discharged into a ladle, the slag was removed. The molten iron after being discharged into the ladle had a C concentration [C]; of 0.25 mass% and a P concentration [P]; of 0.038 mass%, and the concentration of dissolved oxygen [O]ᵢ in the molten iron was 123 mass ppm. After 2 t of quicklime and 1 t of silica stone were added, an oxygen gas was supplied through a top-blowing lance at 20 Nm³/min while a propane gas was supplied at 1 Nm³/min from a porous plug installed at the bottom of the ladle to perform a dephosphorization treatment for ten minutes. As a result, the phosphorus concentration in the molten iron after the dephosphorization treatment was reduced to 0.005 mass%. In this case, the dissolved oxygen concentration [O]_{f} was 560 mass ppm, so that the feed amount of deoxidizing Al and the number of quality defects were small. In addition, the Fe yield was high.

### (Test 4)

150 t of scrap as a cold iron source was melted in an electric furnace, and after the molten iron was discharged into a ladle, the slag was removed. The molten iron after being discharged into the ladle had a C concentration [C]; of 0.24 mass% and a P concentration [P]; of 0.036 mass%, and the concentration of dissolved oxygen [O]ᵢ in the molten iron was 132 mass ppm. After 2 t of quicklime and 1 t of silica stone were added, an oxygen gas was supplied through a top-blowing lance at 20 Nm³/min while a gas containing 50 vol% hydrogen and 50 vol% propane was supplied at 1 Nm³/min from a porous plug installed at the bottom of the ladle to perform a dephosphorization treatment for ten minutes. As a result, the phosphorus concentration in the molten iron after the dephosphorization treatment was reduced to 0.004 mass%. In this case, the dissolved oxygen concentration [O]_{f} was 590 mass ppm, so that the feed amount of deoxidizing Al and the number of quality defects were small. In addition, the Fe yield was high.

### (Test 5)

150 t of reduced iron as a cold iron source was melted in an electric furnace, and after the molten iron was discharged into a ladle, the slag was removed. The molten iron after being discharged into the ladle had a C concentration [C]; of 0.20 mass% and a P concentration [P]ᵢ of 0.140 mass%, and the concentration of dissolved oxygen [O]ᵢ in the molten iron was 136 mass ppm. After 6 t of quicklime and 3 t of silica stone were added, an oxygen gas was supplied through a top-blowing lance at 20 Nm³/min while an argon gas was supplied at 1 Nm³/min from a porous plug installed at the bottom of the ladle to perform a dephosphorization treatment for ten minutes. As a result, the phosphorus concentration in the molten iron after the dephosphorization treatment was reduced to 0.003 mass%, while the dissolved oxygen concentration [O]_{f} was 1720 mass ppm. Accordingly, the feed amount of deoxidizing Al and the number of quality defects were large. In addition, the Fe yield was low.

### (Test 6)

150 t of reduced iron as a cold iron source was melted in an electric furnace, and after the molten iron was discharged into a ladle, the slag was removed. The molten iron after being discharged into the ladle had a C concentration [C]ᵢ of 0.19 mass% and a P concentration [P]ᵢ of 0.130 mass%, and the concentration of dissolved oxygen [O]ᵢ in the molten iron was 160 mass ppm. After 6 t of quicklime and 3 t of silica stone were added, an oxygen gas was supplied through a top-blowing lance at 20 Nm³/min while a hydrogen gas was supplied at 1 Nm³/min from a porous plug installed at the bottom of the ladle to perform a dephosphorization treatment for ten minutes. As a result, the phosphorus concentration in the molten iron after the dephosphorization treatment was reduced to 0.005 mass%. In this case, the dissolved oxygen concentration [O]_{f} was 510 mass ppm, so that the feed amount of deoxidizing Al and the number of quality defects were small. In addition, the Fe yield was high.

### (Test 7)

150 t of reduced iron as a cold iron source was melted in an electric furnace, and after the molten iron was discharged into a ladle, the slag was removed. The molten iron after being discharged into the ladle had a C concentration [C]; of 0.23 mass% and a P concentration [P]ᵢ of 0.126 mass%, and the concentration of dissolved oxygen [O]ᵢ in the molten iron was 140 mass ppm. After 6 t of quicklime and 3 t of silica stone were added, an oxygen gas was supplied through a top-blowing lance at 20 Nm³/min while a propane gas was supplied at 1 Nm³/min from a porous plug installed at the bottom of the ladle to perform a dephosphorization treatment for ten minutes. As a result, the phosphorus concentration in the molten iron after the dephosphorization treatment was reduced to 0.005 mass%. In this case, the dissolved oxygen concentration [O]_{f} was 600 mass ppm, so that the feed amount of deoxidizing Al and the number of quality defects were small. In addition, the Fe yield was high.

### (Test 8)

150 t of reduced iron as a cold iron source was melted in an electric furnace, and after the molten iron was discharged into a ladle, the slag was removed. The molten iron after being discharged into a ladle had a C concentration [C]; of 0.21 mass% and a P concentration [P]ᵢ of 0.132 mass%, and the concentration of dissolved oxygen [O]ᵢ in the molten iron was 150 mass ppm. After 6 t of quicklime and 3 t of silica stone were added, an oxygen gas was supplied through a top-blowing lance at 20 Nm³/min while a gas containing 50 vol% hydrogen and 50 vol% propane was supplied at 1 Nm³/min from a porous plug installed at the bottom of the ladle to perform a dephosphorization treatment for ten minutes. As a result, the phosphorus concentration in the molten iron after the dephosphorization treatment was reduced to 0.005 mass%, while the dissolved oxygen concentration [O]_{f} was 530 mass ppm. Accordingly, the feed amount of deoxidizing Al and the number of quality defects were small. In addition, the Fe yield was high.

The test conditions and the results having been described above are collectively shown in Table 1. For the deoxidizing Al feed amount index, an average for the mass of metal Al in tests 2, 3, 4, 6, 7, and 8 was used as 1.0. For the Fe yield index, an average for the ratio of the mass of the Fe component in the molten iron after the treatment relative to the mass of the melted Fe component in tests 2, 3, 4, 6, 7, and 8 was used as 1.0. For the quality defect index, an average for the rate of occurrence of quality defects per unit mass of the product in tests 2, 3, 4, 6, 7, and 8 was used as 1.0.

**[Table 1]**

| No. | Type of cold iron source | Molten iron when discharged from electric furnace | | | Dephosphorization treatment in ladle | | | | Deoxidizing Al feed amount index | Fe yield index | Quality defect index | Remarks |
|---|---|---|---|---|---|---|---|---|---|---|---|---|
| | | [C]i | [P]i | [O]i | Type of injection gas | [C]f | [P]f | [O]f | | | | |
| | | mass% | mass% | mass ppm | | mass% | mass% | mass ppm | | | | |
| 1 | Scrap | 0.25 | 0.040 | 125 | Inert gas | 0.009 | 0.004 | 1530 | 1.8 | 0.96 | 1.6 | Comparative Example |
| 2 | Scrap | 0.23 | 0.035 | 140 | Hydrogen gas | 0.025 | 0.005 | 630 | 1.0 | 1.00 | 1.0 | Invention Example |
| 3 | Scrap | 0.25 | 0.038 | 123 | Hydrocarbon gas | 0.028 | 0.005 | 560 | 1.0 | 1.00 | 1.0 | Invention Example |
| 4 | Scrap | 0.24 | 0.036 | 132 | Hydrogen-hydrocarbon | 0.026 | 0.004 | 590 | 1.0 | 1.00 | 1.0 | Invention Example |
| 5 | Reduced iron | 0.20 | 0.140 | 136 | Inert gas | 0.008 | 0.003 | 1720 | 1.7 | 0.95 | 1.4 | Comparative Example |
| 6 | Reduced iron | 0.19 | 0.130 | 160 | Hydrogen gas | 0.026 | 0.005 | 510 | 1.0 | 1.00 | 1.0 | Invention Example |
| 7 | Reduced iron | 0.23 | 0.126 | 140 | Hydrocarbon gas | 0.030 | 0.005 | 600 | 1.0 | 1.00 | 1.0 | Invention Example |
| 8 | Reduced iron | 0.21 | 0.132 | 150 | Hydrogen-hydrocarbon | 0.026 | 0.005 | 530 | 1.0 | 1.00 | 1.0 | Invention Example |

### Industrial Applicability

The method for dephosphorization of molten iron according to the present invention can stably produce low-phosphorus steel without having excessive oxygen dissolved, even when the phosphorus concentration or the slag amount has increased, and can stably produce low-phosphorus steel particularly even when reduced iron produced using a reducing agent that emits less CO₂ is mixed in. Thus, this method contributes to CO₂ reduction and is industrially useful.

## Claims

1. A method for dephosphorization of molten iron, **characterized in that**
the method comprises, while blowing a hydrogen gas, a hydrocarbon gas, or a mixture of these gases into molten iron held in a vessel, supplying a slag-forming agent and an oxygen source to perform a dephosphorization treatment of the molten iron and obtain dephosphorized molten iron, and
after the dephosphorization treatment, separating slag floating on a surface of the dephosphorized molten iron from the dephosphorized molten iron.

2. The method for dephosphorization of molten iron according to claim 1, wherein,
after the slag is separated, the dephosphorized molten iron is deoxidized with a deoxidizing agent.

3. The method for dephosphorization of molten iron according to claim 1 or 2, wherein
a carbon content in the molten iron before the dephosphorization treatment is 0.5 mass% or lower.

4. The method for dephosphorization of molten iron according to any one of claims 1 to 3, wherein
the molten iron is obtained by melting a cold iron source.

5. The method for dephosphorization of molten iron according to claim 4, wherein
the cold iron source includes reduced iron.

6. The method for dephosphorization of molten iron according to any one of claims 1 to 5, wherein
the vessel is a ladle.

7. The method for dephosphorization of molten iron according to any one of claims 1 to 6, wherein,
before the dephosphorization treatment, when obtaining molten iron by melting a cold iron source in a melting furnace and discharging the molten iron from the melting furnace into the vessel, one or both of the following are performed: separating generated slag from the molten iron before the discharge; and separating slag that has flowed into the vessel along with the molten iron from the molten iron.
